(19) **Europäisches Patentamt / European Patent Office / Office européen des brevets**

(11) **EP 1 684 480 B1**

(12) **EUROPEAN PATENT SPECIFICATION**

(45) Date of publication and mention
of the grant of the patent:
**24.06.2009 Bulletin 2009/26**

(51) Int Cl.:
***H04L 29/06*** *(2006.01)*

(21) Application number: **05001417.4**

(22) Date of filing: **25.01.2005**

(54) **Method for transmitting informations between a computer device and a consumer device**

Verfahren zur Uebertragung von Informationen zwischen einem Rechner und einem Unterhaltungsgerät

Procédé de transmission d'informations entre un ordinateur et un dispositif client

(84) Designated Contracting States:
**AT BE BG CH CY CZ DE DK EE ES FI FR GB GR HU IE IS IT LI LT LU MC NL PL PT RO SE SI SK TR**

(43) Date of publication of application:
**26.07.2006 Bulletin 2006/30**

(73) Proprietor: **NERO AG**
**76307 Karlsbad (DE)**

(72) Inventors:
• **Eckleder, Andreas**
**76307 Karlsbad (DE)**
• **Lesser, Richard**
**76307 Karlsbad (DE)**

(74) Representative: **Zinkler, Franz et al**
**Schoppe, Zimmermann, Stöckeler & Zinkler**
**Patentanwälte**
**Postfach 246**
**82043 Pullach bei München (DE)**

(56) References cited:
• **SANDISK: "Digital Audio Player User Guide" USER GUIDE, [Online] 7 January 2005 (2005-01-07), pages 0-30, XP002333257 Retrieved from the Internet: URL:http://search.atomz.com/ search/?sp-q=d ap-user-guide-v2.0.pdf&sp- a=sp1002859b&sp- p=all&sp-f=ISO- 8859-1&x=0&y=0> [retrieved on 2005-06-23]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a method for transmitting information between a computer device and a consumer electronic device (CE-device) having a storage unit, the CE-device being adapted to present the computer device a file system and connected with each other.

The invention also relates to a consumer electronic device for storing data, particularly DRM protected data (digital right management protected data), and for communicating with a computer device, comprising a storage for storing said data, a controlling unit and an interface adapted to present a connected computer device as a file system.

The present invention also relates to a computer device comprising a processing unit, a storage unit and an interface unit for communicating with a CE-device, said CE-device presenting a file system when connected to said computer device.

Consumer electric devices, like mp3-player, mpeg-2-player, etc., become more and more popular. One reason is the increasing possibilities to download digital media content, like mp3 music, mpeg-2 videos, etc. Generally, such CE devices comprise a storage unit for storing digital media content, a controller unit and an interface unit. Most commonly, the interface unit uses the standardized USB protocol and present the computer device, the CE device is connected with, a file system. This kind of CE devices belong to the USB mass storage device class.

In order to guarantee copyrights and to avoid or prohibit illegal copies of digital media content, the industry has established so called digital right management systems, however, without standardizing same. Therefore, a plurality of different right management systems exists which are not compatible with each other.

The applicant of the present invention has also introduced a digital right management system called "Nero Digital - Digital Rights Management".

All digital right management systems work with keys necessary for encrypting and decrypting the digital media content, many of which are provided by a key server.

With respect to robustness and safety of the digital right management systems it is of great importance that these keys are not transmitted via unsecured channels. Otherwise, the transmitted key could be captured and illegally used to copy digital media content. Therefore, the whole communication is encrypted using a common key. This key is normally established during an authentication procedure between e.g. the CE device and the computer device. The authentication procedure, however, requires a bi-directional communication path between the CE device and the computer device.

In view of the used CE devices, which are often inexpensive USB stick mp3-player, the interface for communicating with a computer device should be as simple as possible but should nevertheless allow a communication between the CE device and the computer device.

The publication "Digital Audio Player User Guide", SanDisk, User Guide, January 7, 2005, pages 0 to 30, includes a description of a digital audio player. For uploading music to the player, a USB connector cable is connected to the USB port on the player and an open USB port on the computer. Then, music files are dragged to the player the same way as saving files on a hard disk drive. Thus, the player appears as a new hard disk drive on the computer, when the player is connected to the computer.

In view of the above, it is an object of the present invention to provide a method for transmitting information between a computer device and a consumer electronic device (CE device) which may be implemented easily and with few modifications on the hardware side of the CE device.

This object is accomplished by a method as defined in present claim 1.

That is in other words, the information or data transmission from one device to the other is performed by writing and reading small files to and from the storage of the CE device, the file containing the respective data. Due to that inventive approach of transmitting information, the interface of the CE device does not have to be modified for example by incorporating a TCP/IP stack. Rather, the inventive method uses the USB protocol for USB mass storage devices for carrying out a bi-directional communication.

Since the transmitted files are small, preferably between a few bytes to a few kilobytes, this method may be applicable for any CE device handled as a mass storage device when connected to a computer device, because of the low storage requirements for example.

It is apparent that the steps of writing a file and reading that file are alternately performed by the computer device and the CE device in case of a bi-directional communication. That is, e.g., the computer device writes a file containing data to be transmitted, to the storage unit of the CE device. The CE device detects this file, reads the data out of the file and processes the data. The CE device then also writes a file containing the data to be transmitted to the computer device. The computer device detects this new file, reads the data out of the file and processes the data. If the computer device has further data to be transmitted, the afore mentioned steps will be repeated.

In a preferred embodiment, the file name is changed with each writing step in a predetermined manner, preferably by increasing a number being part of the file name by one.

This means in other words that each file written during a particular transmitting step has a unique file name.

This is important as to identify which files have already been written and read by one of the devices. Particularly, each CE device and the computer device each knows which files have to be read on the basis of the unique file names. In case of a file name having a number as a portion of the file name, the devices may recognize which files are written by the other device.

In a preferred embodiment, the file having a former file name is deleted in the file system.

In other words, the files which have already been read are deleted. This measure has the advantage that less memory is occupied by the transmitting procedure.

In a further preferred embodiment, said CE device is a mass storage device, preferably a USB mass storage device.

The present invention is particularly useful with such USB mass storage devices. However, it is to be noted that the inventive method is also applicable to other CE devices using for example the firewire protocol. In all conceivable cases, the CE device is adapted to present the connected computer device a file system, so that both devices are allowed to write and read files to and from the same memory unit.

In a preferred embodiment, said CE device is an mp3-player.

In a further embodiment, said information is data necessary for calculating a bus key common for both devices and required by a digital right management system for encryption and decryption.

The inventive method is particularly useful for transmitting data during an authentication process necessary for establishing a bus key common for both devices. The afore mentioned "Nero Digital" DRM system uses for example such a bus key which is calculated by the involved devices during the authentication.

In a further preferred embodiment, said files are stored in a predetermined folder of the file system of the CE device. More particularly, the files contained in said folder are deleted before writing the first file.

The object of the present invention is also solved by a consumer electronic device for storing data as defined in present claim 9.

In other words, the controller unit is designed (hardware or software based) to have a monitoring element which controls the file system and detects a file having a predetermined receiving file name. If such a file is detected, the processing element reads and processes the data stored in said file. In the event that the consumer electronic device wants to transmit data - as a response - to a the computer device, the transmitting element creates a new file having a predetermined transmitting file name and containing the data to be transmitted to the computer device. This file is then stored also in the file system of the CE device.

The advantage of the inventive consumer electronic device is that a bi-directional communication with a computer device is possible without the need to implement for example a TCP/IP stack for a standard TCP/IP communication. Instead, the file system is used for communication between both devices.

In a preferred embodiment, said interface is a USB interface. More preferably, said CE device is a mass storage device, preferably a USB or firewire mass storage device. Preferably, said device is an mp3-player.

USB and firewire interfaces are the most common interfaces with consumer electronic devices and therefore the present invention is particularly useful.

The object of the present invention is also solved by a computer device as defined in present claim 13.

It is apparent that the computer device has the same functional structure as the consumer electronic device as mentioned before. Therefore, it is referred to the description above in order to avoid repetitions.

In a preferred embodiment, said interface unit is a USB or a firewire interface unit. More preferably, the computer device is a personal computer. However, the present invention is not limited to personal computers. Instead, the computer device may also be a set-top box or any other device allowing the connection of a mass storage device.

Further features and advantages can be taken from the following description and the enclosed drawings.

It is to be understood that the features mentioned above and those yet to be explained below can be used not only in the respective combinations indicated, but also in other combinations or in isolation, without leaving the scope of the present invention.

An embodiment of the invention is shown in the drawings and will be explained in more detail in the description below with reference to same. In the drawings:

Fig. 1     shows a block diagram for illustrating the inventive method;

Fig. 2     is a schematic block diagram of a computer device and a CE device; and

Fig. 3     is a schematic diagram for illustrating the procedure for establishing a common bus key necessary in a digital rights management system.

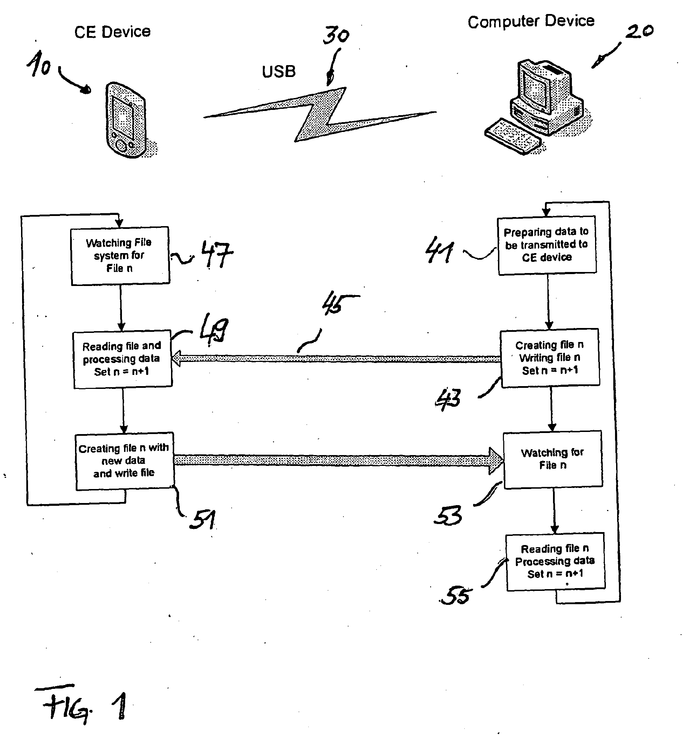

In Fig. 1 a CE device indicated with reference numeral 10 and a computer device indicated with reference numeral 20 are schematically shown. The CE device 10 may be for example a PDA (Personal Digital Assistant), an mp3-player, an mpeg-2 or mpeg-4-player, a mobile phone, etc. The computer device 20 may be for example a personal computer, a set top box or the like.

Both devices 10, 20 have in common an interface allowing a connection with each other for transmitting data. This connection is indicated with an arrow referenced with reference numeral 30. In the present embodiment, both interfaces are USB interfaces. Further, the CE device 10 belongs to the USB mass storage device class meaning that it presents the computer device 20 a file system or file system volume when connected. That is, if the user connects the CE device 10 and the computer device 20 via a USB cable, the computer device 20 recognizes the CE device as a mass storage device and presents the user a new mass storage volume. The user may then read and write files from and to this new volume.

It is, however, to be noted that the present invention should not be limited to the USB based communication. Rather, other protocols like for example firewire protocol, are also applicable. The only requirement is that the CE device 10 presents the computer device 20 a file system.

In particular applications, for example in an authentication procedure for establishing a bus key necessary for a digital rights management, data have to be exchanged between the CE device 10 and the computer device 20. Such a communication between the CE device 10 and the computer device 20 is not performed via for example the standard TCP/IP protocol but on the basis of the USB mass storage device protocol as will be explained below.

It is assumed that the computer device 20 has to transmit specific data to the CE device 10. As shown in Fig. 1, right column, this specific data is prepared to be transmitted to the CE device, block 41. Preparing means for example to bring the data in the appropriate format. Then, the computer device 20 creates a file, for example with a file name "dpac.xxx", where xxx is a sequence number n starting from "000" for the initial first file. The created file "dpac.000", e.g., is written to the mass storage volume of the CE device 10 (block 43). This writing step is indicated by an arrow 45. Then, the sequence number n is increased by 1. The sequence number is then "001".

It is to be noted that the created file "dpac.000" may be stored in the route path of the mass storage device volume or in any folder thereof. It is preferred that the created file is stored in a dedicated folder, for example a folder "nddrm.ath".

At the same time, the CE device 10 watches the file system, particularly the dedicated folder "nddrm.ath" for a file "dpac.xxx". Particularly, the file "dpac.000" is expected (block 47). If the CE device 10 detects the file "dpac.000" in the dedicated folder, the file is read and the data therein is processed (block 49). Further, the sequence number n is increased by 1, that is the sequence number is then "001".

At this point, the transmission of a first data packet contained in the file "dpac.000" has been terminated.

If the CE device 10 has to transmit a response to the computer device 20, the data is prepared and a file is created containing the prepared data.

The created file has the file name "dpac.001" and is written to the dedicated folder "nddrm.ath" of the mass storage device volume (block 51).

At the same time, the computer device 20 monitors or watches the USB mass storage device volume, particularly the dedicated folder for a file "dpac.001" (block 53). Since the CE device 10 has written this file, the computer device 20 detects this file in the dedicated folder and in response thereto reads the file and processes the data stored therein. (block 55). Then, the sequence number n (currently 001) is increased by 1 and is hence "002".

If the computer device 20 has further data to be transmitted to the CE device 10, the above-mentioned procedure starting with block 41 is performed again.

It is apparent from the above description that the communication between the computer device 20 and the CE device 10 is performed by writing and reading files containing the data to be transmitted.

After reading the file in the dedicated folder the file is preferably deleted as to keep the amount of occupied memory as small as possible. Further, before writing the initial packet with the file having the sequence number 000, the computer device 20 makes sure that no files from a previous transmission procedure exist in the dedicated folder. If former files still exist, the files are deleted.

It is also to be noted that the transmission process will be terminated if the CE device of the computer device watches the dedicated folder longer than a predetermined time period (for example 3 seconds) before detecting a file. This has the advantage that both devices 10, 20 have not to transmit any data indicating the end of the transmission of data. The transmission will automatically be terminated after a predetermined time period of no writing.

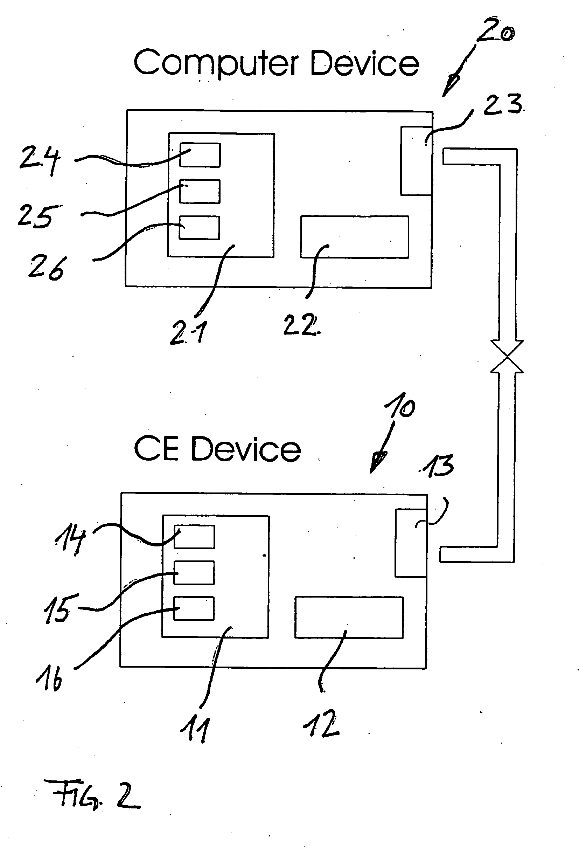

In Fig. 2, the structure of the computer device 20 and the CE device is schematically shown. The computer device 20 comprises at least a controller unit 21, a storage unit 22 and an interface unit 23. The controller unit 21 is for example a microprocessor, and the interface unit 23 is an USB interface.

The controller unit 21 comprises a monitoring element 24, a processing element 25 and a transmitting element 26. These elements 24, 25, 26 are adapted to perform the method steps mentioned above. Particularly, the monitoring element is adapted to watch the file system for a file having a predetermined receiving file name. The processing element 25 is adapted to read and process data stored in said file. The transmitting element 26 is adapted to create a new file having a predetermined transmitting file name and containing data to be transmitted to. Generally, all three elements 24 - 26 are provided in form of software modules. However, it is also possible that they are provided as hardware elements.

The transmitting element 26 supplies the new file to the USB interface 23 which in turn transmits this file to the connected CE device.

The CE device can also comprise a controller unit 11, a storage unit 12 and an interface unit 13. The controller unit 11 is provided as a processor. The interface unit 13 is provided as a USB-interface.

To perform the above mentioned transmission steps, the controller unit 11 comprises a monitoring element 14, a processing element 15 and a transmitting 16. The monitoring element 14 is adapted to watch the presented file system for a file having a predetermined receiving file name. The processing element 15 is adapted to read and process data stored in said file, and said transmitting element 16 is adapted to create a new file having a predetermined transmitting file name and containing data to be transmitted to the computer device. Similar to the computer device 20, the elements 14, 15 and 16 may be provided as software or hardware modules.

As already mentioned before, the method described with reference to Fig. 1 is of particular relevance in connection with Nero Digital - Digital Rights Management. The above transmission method may specifically be used for components authentication.

Usually, key exchange procedures used for digital rights management systems are protected by an authentication procedure establishing a bus key by exchanging key fragments and random numbers encrypted using key sets private to both keys, for example a CE device and a computer device. For communication with USB mass storage devices (CE devices), the source initiates the negotiation process by placing data packets at specified location. The communication partner (CE device) is expected to be in listening (watching mode).

All communication starts with establishing a bus key used for transferring license information. The authentication procedure is based on AES encryption which is known in the art. Each component with support for bus key authentication (CE device, desktop PC software, licensing server, ...) will be assigned an unique component ID and a private set of keys which are used to authenticate the device and to lock out compromised devices. Component IDs and keys are maintained by Nero AG, each developer of a Nero Digital DRM enabled component must request a component ID and associated keys as part of the licensing procedure for a Nero Digital DRM technology.

Using the component ID and the licensed keys, the listening component is able to calculate a key $KR_{auth1}$ that is also known to the active component. Furthermore, the active component's component ID allows the active component to calculate a key $KR_{auth2}$ that is also known to the listening component.

The version number transferred during the authentication procedure is referring to the authentication process only. More specifically, it does not specify the version of the content protocol making use of the bus key obtained as a result of the authentication procedure, and it does not specify the version of the low-level transport protocol used for transferring authentication packets (e.g. authentication procedure for licensing servers and shopping servers, authentication procedure for CE devices without internet connection).

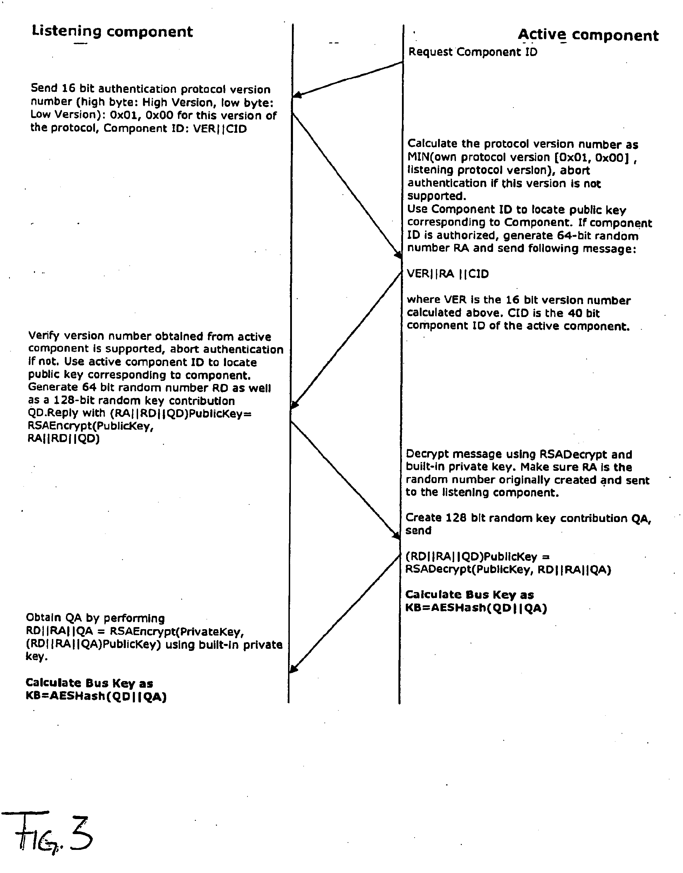

An example of an authentication procedure using a public key encryption is shown in Fig. 3. Here, the symbol '∥' specifies the sequential concatenation of two blocks of data.

The symbol ⊕ specifies a bit-wise exclusive or operation applied to two blocks of data.

The synchronous block cipher algorithm used for Nero Digital DRM is AES in 128-bit key mode (AES-128):

- AES encryption of a 128-bit plain text block m to a 128-bit cipher text block c using a 128-bit key k is specified as c = **AESEncrypt(k, m)** in this document.
- Decryption is specified as **m = AESDecrypt(k, c).**

The AES Hash algorithm **h= AESHash(m)** is used to calculate a hash value over a sequence m of 17 or more bytes. The sequence m shall be padded at the end by the shortest amount of zeros (bytes of value 0x00), such that m consists of two or more consecutive 128-bit blocks $m_i$, i=0..last. The result is a single 128-bit value $h$, which shall be calculated from the equations

$$h_1 = \text{AESEncrypt}(m_0, m_1) \oplus m_1;$$

$$h_i = \text{AESEncrypt}(h_{i-1}, m_i) \oplus m_i; \quad i = 2..last-1;$$

$$h = \text{AESEncrypt}(h_{last-1}, m_{last}) \oplus m_{last}$$

All intermediate values $h_i$ shall be discarded.

**Ciphertext = RSAEncrypt(PublicKey, Plaintext)** and **Plaintext = RSADecrypt(PrivateKey, Ciphertext)** denote encryption/decryption using the RSA encryption algorithm. *PublicKey* specifies the public key to be used for encryption, *PrivateKey* denotes the private key to be used for decryption. *Ciphertext* is a block of encrypted data while *Plaintext* is a block of unencrypted data.

It is to be noted that the authentication procedure shown in Fig. 3 is just one example of a plurality of conceivable procedures and shall not limit the invention.

As a general rule, all newer components have to support old versions of the authentication procedure unless explicitly specified by Nero AG. Support for outdated versions of the authentication protocol shall be dropped upon notice to do so.

Depending on the kind of transaction, the active component will either actively push a license to the listening component or fetch a license off the specifying the purpose for witch a license is to be obtained (in example playback, transfer to CE device to or physical medium, transferring transmission from one license account to another, checking whether a specific operation is covered by a license.

All communication after negotiating the bus key must be encrypted using the bus key.

The active component in transferring licenses to a CE device is always the originating system, in example a computer device, a personal computer or a set-top box. The data packets mentioned in Fig. 3 are transmitted from the originating system, namely the computer device, to the listening component, namely the CE device by using the method as described with reference to Fig. 1. As soon as the steps shown in Fig. 3 are performed, the common bus key is known to the computer device 20 as well as to the CE device 10. On the basis of this bus key, all further communication between both devices may be encrypted.

It is to be noted that during establishing the bus key, no relevant data allowing reconstructing the bus key is transmitted between the devices. Further, it is to be noted that the CE device does not need to have a TCP/IP stack or the like allowing a standard bi-directional communication.

Those skilled in the art can now appreciate from the foregoing description that the broad teaching of the present invention can be implemented in a variety of forms. Therefore, while this invention has been described in connection with a particular example thereof, the true scope of the invention should not be so be limited since other modification will become apparent to the skilled practitioner upon a study of the drawing, specification and the claims.

**Claims**

**1.** Method for transmitting information between a computer device (20) and a consumer electronic device (10) having a storage unit (12), the consumer electronic device (10) being adapted to present the computer device (20) a file system when connected to the computer device (20), comprising the steps of:

by the computer device (20), writing (45) a first file having a first predetermined file name, the file comprising information to be transmitted to the consumer electronic device (10), in the file system of the consumer electronic device (10);

by the consumer electronic device (10), watching (47) the file system for the first file having the first predetermined file name;

by the consumer electronic device (10), when the first file having the first predetermined file name is detected, reading (49) said file having said first predetermined file name and processing data read from the first file;

by the consumer electronic device (10), when the consumer electronic device wants to transmit data to the computer device as a response, writing (51) a second file having a predetermined file name to the file system of the consumer electronic device (10), the second file having the data to be transmitted to the computer device;

by the computer device (20), monitoring (53) the file system of the consumer electronic device (10) for a second file having the second predetermined file name; and

by the computer device (20), when the second file having the second predetermined file name is detected, reading (55) the data from the second file and processing data read from the second file.

**2.** Method of claim 1, in which the first predetermined file name is changed in predetermined manner to obtain the second predetermined file name

**3.** Method of claim 2, in which the first predetermined file name includes a sequence number and the second predetermined file name includes a sequence number being different from the first sequence number.

**4.** Method of claim 1, 2 or 3, wherein said consumer electronic device (10) is a mass storage device, preferably a USB mass storage device.

5. Method of claim 4, wherein said consumer electronic device (10) is a mp3-player.

6. Method of any one of claims 1 to 5, wherein said information is necessary for calculating a bus key common for both devices (10, 20) and required by a digital rights management system for encryption.

7. Method of any one of the preceding claims, wherein said files are stored in a predetermined folder of the file system of the consumer electronic device (10).

8. Method of claim 7, wherein the files comprised in said folder are deleted before writing the first file.

9. Consumer electronic device (10) for storing data, and for communicating with a computer device (20), comprising a storage unit (12) for storing said data, a controller unit (11) and an interface (13) adapted to present a connected computer device (20) a file system, wherein said controller unit (11) comprises:

a monitoring element (14) adapted to watch the file system of the consumer electronic device (10) for a first file having a first predetermined file name,
a processing element (15) adapted to read and process data stored in said first file having the first predetermined file name when the first predetermined file name is detected by the monitoring element (14), and
a transmitting element (16) adapted to create a second file in the file system of the consumer electronic device (10) having a second predetermined file name, when the consumer electronic device wants to transmit data to the computer device as a response, the second file comprising the data to be transmitted to the computer device (20).

10. Consumer electronic device according to claim 9, wherein said interface is a USB interface.

11. Consumer electronic device according to claim 9 or 10, wherein said consumer electronic device (10) is a mass storage device, preferably a USB or firewire mass storage device.

12. Consumer electronic device according to claim 9, 10, or 11, wherein said device is an mp3-player.

13. Computer device (20) comprising a processor unit (21), a storage unit (22) and an interface unit (23) for communicating with a consumer electronic device (10), said consumer electronic device (10) presenting a file system when connected to said computer device (20), wherein said processor unit (21) comprises:

a monitoring element (24) adapted to watch the presented file system for a first file having a first predetermined file name,
a processing element (25) adapted to read and process data stored in said first file having the first predetermined file name, when the first predetermined file name is detected by the monitoring element; and
a transmitting element (26) adapted to create a second file having a second predetermined file name in the file system of the consumer electronic device (10), when the computer device wants to transmit data to the consumer electronic device (10) as a response, the second file comprising the data to be transmitted to the consumer electronic device (10).

14. Computer device according to claim 13, wherein said interface unit (23) is a USB or a firewire interface unit.

15. Computer device according to claim 13, wherein it is provided as a personal computer.

16. Computer device according to claim 13, wherein it is provided as a set-top box.

17. System for transmitting information between a computer device (20) and a consumer electronic device (10) having a storage unit (12), the consumer electronic device being adapted to present the computer device (20) a file system when connected to the computer device (20), comprising:

in the computer device (20), a writer (26) for writing a first file having a first predetermined file name, the file comprising information to be transmitted to the consumer electronic device (10), in the file system of the consumer electronic device (10);

in the consumer electronic device (10), a watcher (14) for watching the file system for the first file having the first predetermined file name;

in the consumer electronic device (10), a reader (15) for reading said file having said first predetermined file name and processing data read from the first file, when the first file having the first predetermined file name is detected;

in the consumer electronic device (10), a writer (16) for writing a second file having a predetermined file name to the file system of the consumer electronic device (10), when the consumer electronic device wants to transmit data to the computer device as a response, the second file having the data to be transmitted to the computer device;

in the computer device (20), a monitorer (24) for monitoring the file system of the consumer electronic device (10) for the second file having the second predetermined file name; and

in the computer device (20), a reader (25) for reading the second file and processing the data read from the second file, when the second file having the second predetermined file name is detected.

18. Method of storing data and of communicating with a computer device (20), in a consumer electronic device (10) comprising a storage unit (12) for storing said data, a controller unit (11) and an interface (13) adapted to present a connected computer device (20) a file system, wherein said controller unit (11) being adapted to perform the following steps:

watching (47) the file system of the consumer electronic device (10) for a first file having a first predetermined file name,

reading (49) and processing data stored in said first file having the first predetermined file name, when the first predetermined file name is detected in the step of watching, and

creating (51) a second file having a second predetermined file name in the file system of the consumer electronic device (10), when the consumer electronic device wants to transmit data to the computer device as a response, the second file comprising the data to be transmitted to the computer device (20).

19. Method of communicating from a computer device (20) comprising a processor unit (21), a storage unit (22) and an interface unit (23) to a consumer electronic device (10), said consumer electronic device (10) presenting a file system when connected to said computer device (20), said computer device being adapted to perform the following steps:

watching (53) the presented file system for a first file having a first predetermined file name,

reading (55) and processing data stored in said first file having the first predetermined file name, when the first predetermined file name is detected in the step of watching (53); and

creating (43) a second file having a second predetermined file name in the file system of the consumer electronic device (10), when the computer device wants to transmit data to the consumer electronic device as a response, the second file comprising the data to be transmitted to the consumer electronic device (10).

**Patentansprüche**

1. Verfahren zum Übertragen von Informationen zwischen einem Computergerät (20) und einem Verbraucherelektronikgerät (10) mit einer Speichereinheit (12), wobei das Verbraucherelektronikgerät (10) angepasst ist, um dem Computergerät (20) ein Dateisystem zu präsentieren, wenn dasselbe mit dem Computergerät (20) verbunden ist, wobei das Verfahren folgende Schritte umfasst:

durch das Computergerät (20), Schreiben (45) einer ersten Datei mit einem ersten vorbestimmten Dateinamen in das Dateisystem des Verbraucherelektronikgeräts (10), wobei die Datei Informationen umfasst, die zu dem Verbraucherelektronikgerät (10) zu übertragen sind;

durch das Verbraucherelektronikgerät (10), Beobachten (47) des Dateisystems nach der ersten Datei mit dem ersten vorbestimmten Dateinamen;

durch das Verbraucherelektronikgerät (10), wenn die erste Datei mit dem ersten vorbestimmten Dateinamen erfasst wird, Lesen (49) der Datei mit dem ersten vorbestimmten Dateinamen und Verarbeiten von Daten, die von der ersten Datei gelesen werden;

durch das Verbraucherelektronikgerät (10), wenn das Verbraucherelektronikgerät als eine Antwort Daten zu dem Computergerät übertragen möchte, Schreiben (51) einer zweiten Datei mit einem vorbestimmten Dateinamen in das Dateisystem des Verbraucherelektronikgeräts (10), wobei die zweite Datei die Daten aufweist, die zu dem Computergerät zu übertragen sind;

durch das Computergerät (20), Überwachen (53) des Dateisystems des Verbraucherelektronikgeräts (10) nach einer zweiten Datei mit dem zweiten vorbestimmten Dateinamen; und

durch das Computergerät (20), wenn die zweite Datei mit dem zweiten vorbestimmten Dateinamen erfasst wird, Lesen (55) der Daten von der zweiten Datei und Verarbeiten von Daten, die von der zweiten Datei gelesen werden.

2. Verfahren gemäß Anspruch 1, bei dem der erste vorbestimmte Dateiname auf vorbestimmte Weise geändert wird, um den zweiten vorbestimmten Dateinamen zu erhalten.

3. Verfahren gemäß Anspruch 2, bei dem der erste vorbestimmte Dateiname eine Folgenummer umfasst, und der zweite vorbestimmte Dateiname eine Folgenummer umfasst, die sich von der ersten Folgenummer unterscheidet.

4. Verfahren gemäß Anspruch 1, 2 oder 3, bei dem das Verbraucherelektronikgerät (10) ein Massenspeichergerät ist, vorzugsweise ein USB-Massenspeichergerät.

5. Verfahren gemäß Anspruch 4, bei dem das Verbraucherelektronikgerät (10) ein MP3-Abspielgerät ist.

6. Verfahren gemäß einem der Ansprüche 1 bis 5, bei dem die Informationen notwendig sind zum Berechnen eines Bus-Schlüssels, der für beide Geräte (10, 20) gleich ist und von einem Digitale‑Rechte‑Verwaltungssystem für Verschlüsselung gefordert wird.

7. Verfahren gemäß einem der vorhergehenden Ansprüche, bei dem die Dateien in einem vorbestimmten Ordner des Dateisystems des Verbraucherelektronikgeräts (10) gespeichert sind.

8. Verfahren gemäß Anspruch 7, bei dem die Dateien, die in dem Ordner enthalten sind, gelöscht werden, bevor die erste Datei geschrieben wird.

9. Verbraucherelektronikgerät (10) zum Speichern von Daten und zum Kommunizieren mit einem Computergerät (20), das eine Speichereinheit (12) zum Speichern der Daten, eine Steuerungseinheit (11) und eine Schnittstelle (13) umfasst, das angepasst ist, um einem verbundenen Computergerät (20) ein Dateisystem zu präsentieren, wobei die Steuerungseinheit (11) folgende Merkmale umfasst:

ein Überwachungselement (14), das angepasst ist, um das Dateisystem des Verbraucherelektronikgeräts (10) nach einer ersten Datei mit einem ersten vorbestimmten Dateinamen zu beobachten,

ein Verarbeitungselement (15), das angepasst ist, um Daten, die in der ersten Datei mit dem ersten vorbestimmten Dateinamen gespeichert sind, zu lesen und zu verarbeiten, wenn der erste vorbestimmte Dateiname durch das Überwachungselement (14) erfasst wird, und

ein Übertragungselement (16), das angepasst ist, um eine zweite Datei mit einem zweiten vorbestimmten Dateinamen in dem Dateisystem des Verbraucherelektronikgeräts (10) zu erzeugen, wenn das Verbraucherelektronikgerät als eine Antwort Daten zu dem Computergerät übertragen möchte, wobei die zweite Datei die Daten umfasst, die zu dem Computergerät (20) zu übertragen sind.

10. Verbraucherelektronikgerät gemäß Anspruch 9, bei dem die Schnittstelle eine USB-Schnittstelle ist.

11. Verbraucherelektronikgerät gemäß Anspruch 9 oder 10, wobei das Verbraucherelektronikgerät (10) ein Massenspeichergerät ist, vorzugsweise ein USB- oder Firewire-Massenspeichergerät.

12. Verbraucherelektronikgerät gemäß Anspruch 9, 10 oder 11, wobei das Gerät ein MP3-Abspielgerät ist.

13. Computergerät (20), das eine Prozessoreinheit (21), eine Speichereinheit (22) und eine Schnittstelleneinheit (23) zum Kommunizieren mit einem Verbraucherelektronikgerät (10) umfasst, wobei das Verbraucherelektronikgerät (10) ein Dateisystem präsentiert, wenn es mit dem Computergerät (20) verbunden ist, wobei die Prozessoreinheit (21) folgende Merkmale umfasst:

ein Überwachungselement (24), das angepasst ist, um das präsentierte Dateisystem nach einer ersten Datei mit einem ersten vorbestimmten Dateinamen zu beobachten,

ein Verarbeitungselement (25), das angepasst ist, um Daten, die in der ersten Datei mit dem ersten vorbestimmten Dateinamen gespeichert sind, zu lesen und zu verarbeiten, wenn der erste vorbestimmte Dateiname durch das Überwachungselement erfasst wird; und

ein Übertragungselement (26), das angepasst ist, um eine zweite Datei mit einem zweiten vorbestimmten Dateinamen in dem Dateisystem des Verbraucherelektronikgeräts (10) zu erzeugen, wenn das Computergerät als eine Antwort Daten zu dem Verbraucherelektronikgerät (10) übertragen möchte, wobei die zweite Datei die Daten umfasst, die zu dem Verbraucherelektronikgerät (10) zu übertragen sind.

14. Computergerät gemäß Anspruch 13, bei dem die Schnittstelleneinheit (23) eine USB- oder eine Firewire-Schnittstelleneinheit ist.

15. Computergerät gemäß Anspruch 13, wobei dasselbe als ein Personalcomputer vorgesehen ist.

16. Computergerät gemäß Anspruch 13, wobei dasselbe als eine Set-Top-Box vorgesehen ist.

17. System zum Übertragen von Informationen zwischen einem Computergerät (20) und einem Verbraucherelektronikgerät (10) mit einer Speichereinheit (12), wobei das Verbraucherelektronikgerät angepasst ist, um dem Computergerät (20) ein Dateisystem zu präsentieren, wenn dasselbe mit dem Computergerät (20) verbunden ist, wobei das System folgende Merkmale umfasst:

in dem Computergerät (20), einen Schreiber (26) zum Schreiben einer ersten Datei mit einem ersten vorbestimmten Dateinamen in das Dateisystem des Verbraucherelektronikgeräts (10), wobei die Datei Informationen umfasst, die zu dem Verbraucherelektronikgerät (10) zu übertragen sind;

in dem Verbraucherelektronikgerät (10), eine Beobachtungseinrichtung (14) zum Beobachten des Dateisystems nach der ersten Datei mit dem ersten vorbestimmten Dateinamen;

in dem Verbraucherelektronikgerät (10), einen Leser (15) zum Lesen der Datei mit dem ersten vorbestimmten Dateinamen und Verarbeiten von Daten, die von der ersten Datei gelesen werden, wenn die erste Datei mit dem ersten vorbestimmten Dateinamen erfasst wird;

in dem Verbraucherelektronikgerät (10), einen Schreiber (16) zum Schreiben einer zweiten Datei mit einem vorbestimmten Dateinamen in das Dateisystem des Verbraucherelektronikgeräts (10), wenn das Verbraucherelektronikgerät als eine Antwort Daten zu dem Computergerät übertragen möchte, wobei die zweite Datei die Daten aufweist, die zu dem Computergerät zu übertragen sind;

in dem Computergerät (20), eine Überwachungseinrichtung (24) zum Überwachen des Dateisystems des Verbraucherelektronikgeräts (10) nach der zweiten Datei mit dem zweiten vorbestimmten Dateinamen; und

in dem Computergerät (20), einen Leser (25) zum Lesen der zweiten Datei und Verarbeiten der Daten, die von der zweiten Datei gelesen werden, wenn die zweite Datei mit dem zweiten vorbestimmten Dateinamen erfasst wird.

18. Verfahren zum Speichern von Daten und zum Kommunizieren mit einem Computergerät (20), in einem Verbraucherelektronikgerät (10), das eine Speichereinheit (12) zum Speichern der Daten, eine Steuerungseinheit (11) und eine Schnittstelle (13) umfasst, das angepasst ist, um einem verbundenen Computergerät (20) ein Dateisystem zu präsentieren, wobei die Steuerungseinheit (11) angepasst ist, um die folgenden Schritte durchzuführen:

Beobachten (47) des Dateisystems des Verbraucherelektronikgeräts (10) nach einer ersten Datei mit einem ersten vorbestimmten Dateinamen,

Lesen(49) und Verarbeiten von Daten, die in der ersten Datei mit dem ersten vorbestimmten Dateinamen gespeichert sind, wenn bei dem Schritt des Beobachtens der erste vorbestimmte Dateiname erfasst wird, und Erzeugen (51) einer zweiten Datei mit einem zweiten vorbestimmten Dateinamen in dem Dateisystem des Verbraucherelektronikgeräts (10), wenn das Verbraucherelektronikgerät als eine Antwort Daten zu dem Computergerät übertragen möchte, wobei die zweite Datei die Daten umfasst, die zu dem Computergerät (20) zu übertragen sind.

19. Verfahren zum Kommunizieren von einem Computergerät (20), das eine Prozessoreinheit (21), eine Speichereinheit (22) und eine Schnittstelleneinheit (23) umfasst, zu einem Verbraucherelektronikgerät (10), wobei das Verbraucherelektronikgerät (10) ein Dateisystem präsentiert, wenn dasselbe mit dem Computergerät (20) verbunden ist, wobei das Computergerät angepasst ist, um die folgenden Schritte durchzuführen:

Beobachten (53) des präsentierten Dateisystems nach einer ersten Datei mit einem ersten vorbestimmten Dateinamen,

Lesen (55) und Verarbeiten von Daten, die in der ersten Datei mit dem ersten vorbestimmten Dateinamen gespeichert sind, wenn bei dem Schritt des Überwachens (53) der erste vorbestimmte Dateiname erfasst wird; Erzeugen (43) einer zweiten Datei mit einem zweiten vorbestimmten Dateinamen in dem Dateisystem des Verbraucherelektronikgeräts (10), wenn das Computergerät als eine Antwort Daten zu dem Verbraucherelektronikgerät übertragen möchte, wobei die zweite Datei die Daten umfasst, die zu dem Verbraucherelektronikgerät (10) zu übertragen sind.

## Revendications

1. Procédé de transmission d'informations entre un ordinateur et un dispositif ordinateur (20) et un dispositif électronique de consommateur (10) présentant une unité de mémoire (12), le dispositif électronique de consommateur (10) étant adapté de manière à présenter au dispositif ordinateur (20) un système de fichiers lorsqu'il est connecté au dispositif ordinateur (20), comprenant les étapes consistant à:

   par le dispositif ordinateur (20), écrire (45) un premier fichier portant un premier nom de fichier prédéterminé, le fichier comprenant des informations à transmettre au dispositif électronique de consommateur (10), dans le système de fichiers du dispositif électronique de consommateur (10);
   par le dispositif électronique de consommateur (10), observer (47) le système de fichiers pour détecter le premier fichier portant le nom de fichier prédéterminé;
   par le dispositif électronique de consommateur (10), lorsque le premier fichier portant le nom de fichier prédéterminé est détecté, lire (49) ledit fichier portant ledit premier nom de fichier prédéterminé et traiter les données lues du premier fichier;
   par le dispositif électronique de consommateur (10), lorsque le dispositif électronique de consommateur désire transmettre des données au dispositif ordinateur comme réponse, écrire (51) un deuxième fichier portant un nom de fichier prédéterminé dans le système de fichiers du dispositif électronique de consommateur (10), le deuxième fichier présentant les données à transmettre au dispositif ordinateur;
   par le dispositif ordinateur (20), surveiller (53) le système de fichiers du dispositif électronique de consommateur (10) pour détecter un deuxième fichier portant le deuxième nom de fichier prédéterminé; et
   par le dispositif ordinateur (20), lorsque le deuxième fichier portant le deuxième nom de fichier prédéterminé est détecté, lire (55) les données du deuxième fichier et traiter les données lues du deuxième fichier.

2. Procédé selon la revendication 1, dans lequel le premier nom de fichier prédéterminé est modifié de manière prédéterminée, pour obtenir le deuxième nom de fichier prédéterminé.

3. Procédé selon la revendication 2, dans lequel le premier nom de fichier prédéterminé comporte un numéro de séquence et le deuxième nom de fichier prédéterminé comporte un numéro de séquence différent du premier numéro de séquence.

4. Procédé selon la revendication 1, 2 ou 3, dans lequel ledit dispositif électronique de consommateur (10) est un dispositif de mémoire de grande capacité, de préférence un dispositif de mémoire de grande capacité USB.

5. Procédé selon la revendication 4, dans lequel ledit électronique de consommateur (10) est un reproducteur mp3.

6. Procédé selon l'une quelconque des revendications 1 à 5, dans lequel lesdites informations sont nécessaires pour calculer une clé de bus commune pour les deux dispositifs (10, 20) et requise par un système de gestion de droits numérique pour cryptage.

7. Procédé selon l'une quelconque des revendications précédentes, dans lequel lesdits fichiers sont mémorisés dans un dossier prédéterminé du système de fichiers du dispositif électronique de consommateur (10).

8. Procédé selon la revendication 1, dans lequel les fichiers dans ledit dossier sont effacés avant d'écrire le premier fichier.

9. Dispositif électronique de consommateur (10) permettant de mémoriser des données et de communiquer avec un dispositif ordinateur (20), comprenant une unité de mémoire (12) destinée à mémoriser lesdites données, une unité de contrôleur (11) et une interface (13) adaptée pour présenter à un dispositif ordinateur connecté (20) un système de fichiers, dans lequel ladite unité de contrôleur (11) comprend:

un élément de surveillance (14) adapté de manière à surveiller le système de fichiers du dispositif électronique de consommateur (10) pour détecter un premier fichier portant un premier nom de fichier prédéterminé,
un élément de traitement (15) adapté de manière à lire et traiter les données mémorisées dans ledit premier fichier portant le premier nom de fichier prédéterminé lorsque le premier nom de fichier prédéterminé est détecté par l'élément de surveillance (14); et
un élément de transmission (16) adapté de manière à créer un deuxième fichier dans le système de fichiers du dispositif électronique de consommateur (10) portant un deuxième nom de fichier prédéterminé lorsque le dispositif électronique de consommateur désire transmettre des données au dispositif ordinateur comme réponse, le deuxième fichier comprenant les données à transmettre au dispositif ordinateur (20).

**10.** Dispositif électronique de consommateur selon la revendication 9, dans lequel ladite interface est une interface USB.

**11.** Dispositif électronique de consommateur selon la revendication 9 ou 10, dans lequel ledit dispositif électronique de consommateur (10) est un dispositif de mémoire de grande capacité, de préférence un dispositif de mémoire de grande capacité USB ou FireWire.

**12.** Dispositif électronique de consommateur selon la revendication 9, 10 ou 11, dans lequel ledit dispositif est un reproducteur mp3.

**13.** Dispositif ordinateur (20) comprenant une unité de processeur (21), une unité de mémoire (22) et une unité d'interface (23) pour communiquer avec un dispositif électronique de consommateur (10), ledit dispositif électronique de consommateur (10) présentant un système de fichiers lorsqu'il est connecté audit dispositif ordinateur (20), dans lequel ladite unité de processeur (21) comprend:

un élément de surveillance (24) adapté de manière à observer le système de fichiers présenté pour détecter un premier fichier portant un premier nom de fichier prédéterminé;
un élément de traitement (25) adapté de manière à lire et traiter les données mémorisées dans ledit premier fichier portant le premier nom de fichier prédéterminé lorsque le premier nom de fichier prédéterminé est détecté par l'élément de surveillance; et
un élément de transmission (26) adapté de manière à créer un deuxième fichier portant un deuxième nom de fichier prédéterminé dans le système de fichiers du dispositif électronique de consommateur (10) lorsque le dispositif ordinateur désire transmettre des données au dispositif électronique de consommateur (10) comme réponse, le deuxième fichier comprenant les données à transmettre au dispositif électronique de consommateur (10).

**14.** Dispositif ordinateur selon la revendication 13, dans lequel ladite unité d'interface (23) est une unité d'interface USB ou FireWire.

**15.** Dispositif ordinateur selon la revendication 13, dans lequel il est prévu comme ordinateur personnel.

**16.** Dispositif ordinateur selon la revendication 13, dans lequel il est prévu comme décodeur.

**17.** Système permettant la transmission d'informations entre un dispositif ordinateur (20) et un dispositif électronique de consommateur (10) présentant une unité de mémoire (12), le dispositif électronique de consommateur étant adapté de manière à présenter au dispositif ordinateur (20) un système de fichiers lorsqu'il est connecté au dispositif ordinateur (20), comprenant:

dans le dispositif ordinateur (20), un moyen d'écriture (26) destiné à écrire un premier fichier portant un premier nom de fichier prédéterminé, le fichier comprenant des informations à transmettre au dispositif électronique de consommateur (10), dans le système de fichiers du dispositif électronique de consommateur (10);
dans le dispositif électronique de consommateur (10), un moyen d'observation (14) destiné à observer le système de fichiers pour détecter le premier fichier portant le premier nom de fichier prédéterminé;
dans le dispositif électronique de consommateur (10), un lecteur (15) destiné à lire ledit fichier portant ledit premier nom de fichier prédéterminé et à traiter les données lues du premier fichier lorsque le premier fichier portant le premier nom de fichier prédéterminé est détecté;
dans le dispositif électronique de consommateur (10), un moyen d'écriture (16) destiné à écrire un deuxième fichier portant un premier nom de fichier prédéterminé dans le système de fichiers du dispositif électronique de consommateur (10) lorsque le dispositif électronique de consommateur désire transmettre des données au dispositif ordinateur comme réponse, le deuxième fichier présentant les données à transmettre au dispositif ordinateur;

dans le dispositif ordinateur (20), un moyen de surveillance (24) destiné à surveiller le système de fichiers du dispositif électronique de consommateur (10) pour détecter le deuxième fichier portant le deuxième nom de fichier prédéterminé; et

dans le dispositif ordinateur (20), un lecteur (25) destiné à lire le deuxième fichier et traiter les données lues du deuxième fichier lorsque le deuxième fichier portant le deuxième nom de fichier prédéterminé est détecté.

**18.** Procédé pour mémoriser des données, et communiquer avec un dispositif ordinateur (20), dans un dispositif électronique de consommateur (10) comprenant une unité de mémoire (12) destiné à mémoriser lesdites données, une unité de contrôleur (11) et une interface (13) adaptée de manière à présenter à un dispositif ordinateur (20) connecté un système de fichiers, où ladite unité de contrôleur (11) est adaptée pour exécuter les étapes suivantes consistant à:

observer (47) le système de fichiers du dispositif électronique de consommateur (10) pour détecter un premier fichier portant un premier nom de fichier prédéterminé;

lire (49) et traiter les données mémorisées dans ledit premier fichier portant le premier nom de fichier prédéterminé lorsque le premier nom de fichier prédéterminé est détecté à l'étape consistant à observer; et

créer (51) un deuxième fichier portant un deuxième nom de fichier prédéterminé dans le système de fichiers du dispositif électronique de consommateur (10) lorsque le dispositif électronique de consommateur désire transmettre des données au dispositif ordinateur comme réponse, le deuxième fichier comprenant les données à transmettre au ordinateur (20).

**19.** Procédé pour communiquer d'un dispositif ordinateur (20), comprenant une unité de processeur (21), une unité de mémoire (22) et une unité d'interface (23), vers le dispositif électronique de consommateur (10), ledit dispositif électronique de consommateur (10) présentant un système de fichiers lorsqu'il est connecté audit dispositif ordinateur (20), ledit dispositif ordinateur étant adapté de manière à exécuter les étapes suivantes consistant à:

observer (53) le système de fichiers présenté pour détecter un premier fichier portant un premier nom de fichier prédéterminé,

lire (55) et traiter les données mémorisées dans ledit premier fichier portant le premier nom de fichier prédéterminé lorsque le premier nom de fichier prédéterminé est détecté à l'étape consistant à observer (53); et

créer (43) un deuxième fichier portant un deuxième nom de fichier prédéterminé dans le système de fichiers du dispositif électronique de consommateur (10) lorsque le dispositif ordinateur désire transmettre des données au dispositif électronique de consommateur comme réponse, le deuxième fichier comprenant les données à transmettre au dispositif électronique de consommateur (10).

CE Device

USB *30*

Computer Device *20*

*10*

Watching File
system for
File n *47*

Reading file and
processing data
Set n = n+1 *49*

Creating file n with
new data
and write file *51*

*45*

*43*

Preparing data to
be transmitted to
CE device *41*

Creating file n
Writing file n
Set n = n+1

Watching for
File n *53*

Reading file n
Processing data
Set n = n+1 *55*

FIG. 1

## Computer Device

**FIG. 2**

**Listening component**

**Active component**

Request Component ID

Send 16 bit authentication protocol version number (high byte: High Version, low byte: Low Version): 0x01, 0x00 for this version of the protocol, Component ID: VER||CID

Calculate the protocol version number as MIN(own protocol version [0x01, 0x00] , listening protocol version), abort authentication if this version is not supported.
Use Component ID to locate public key corresponding to Component. If component ID is authorized, generate 64-bit random number RA and send following message:

VER||RA ||CID

where VER is the 16 bit version number calculated above. CID is the 40 bit component ID of the active component.

Verify version number obtained from active component is supported, abort authentication if not. Use active component ID to locate public key corresponding to component. Generate 64 bit random number RD as well as a 128-bit random key contribution QD.Reply with (RA||RD||QD)PublicKey= RSAEncrypt(PublicKey, RA||RD||QD)

Decrypt message using RSADecrypt and built-in private key. Make sure RA is the random number originally created and sent to the listening component.

Create 128 bit random key contribution QA, send

(RD||RA||QD)PublicKey = RSADecrypt(PublicKey, RD||RA||QA)

**Calculate Bus Key as KB=AESHash(QD||QA)**

Obtain QA by performing RD||RA||QA = RSAEncrypt(PrivateKey, (RD||RA||QA)PublicKey) using built-in private key.

**Calculate Bus Key as KB=AESHash(QD||QA)**

Fig. 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Digital Audio Player User Guide,* 07 January 2005, 0-30